# EUROPÄISCHE PATENTSCHRIFT

(11) **EP 1 170 338 B1**
(45) Veröffentlichungstag und Bekanntmachung des Hinweises auf die Patenterteilung: **24.05.2006**
(21) Anmeldenummer: 01115057.0
(22) Anmeldetag: 21.06.2001
(51) Int. Cl.: C09B 67/48, C09B 67/10, C09B 63/00

(54) **Neue Kristallmodifikationen von C.I. Pigment Yellow 191 und Verfahren zu ihrer Herstellung**
New crystalline modification of C.I. Pigment Yellow 191 and manufacturing process thereof
Nouvelle modification cristalline du Pigment C.I. Yellow 191 et son procédé de fabrication

(30) Priorität: 04.07.2000 DE 10032315
(43) Veröffentlichungstag der Anmeldung: 09.01.2002
(60) Teilanmeldung: 05001501.5
(73) Patentinhaber: Clariant Produkte (Deutschland) GmbH, 65929 Frankfurt am Main (DE)
(72) Erfinder: Schmidt, Martin U., Dr., 65931 Frankfurt am Main (DE); ACS, Arpad, Dr., 61440 Oberursel (DE); Jung, Rüdiger, Dr., 65779 Kelkheim (DE); Schui, Franz, Dr., 65936 Frankfurt am Main (DE)

(56) Entgegenhaltungen:
- EP-A- 0 126 405
- EP-A- 0 225 553
- EP-A- 0 361 431
- EP-A- 1 010 732
- US-A- 4 980 458
- US-B1- 6 235 100

## Beschreibung

Die vorliegende Erfindung betrifft eine neue Kristallmodifikation (beta) von C.I. Pigment Yellow 191 der Formel (1), ihre Herstellung und Verwendung als Pigment.

Als C.I. Pigment Yellow 191 (im folgenden: P.Y. 191) wird die Verbindung der Formel (1) bezeichnet, die aus einer Kupplung von diazotierter 2-Amino-4-chlor-5-methyl-benzolsulfonsäure mit 1-(3'-Sulfophenyl)-3-methyl-5-pyrazolon und nachfolgender Umsetzung der gebildeten Disulfosäure mit einem Calciumsalz entsteht.

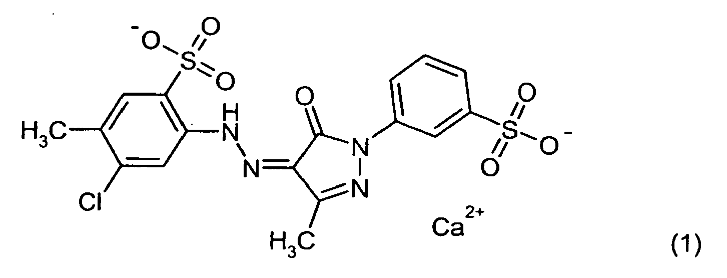

Im festen Zustand kann die Verbindung (1) auch in einer anderen tautomeren und/oder cis-trans-isomeren Form vorliegen, und ggf. noch Na⁺-lonen, Cl⁻ -lonen und Wassermoleküle enthalten, üblicherweise jeweils bis zu 10 Gew.-%.
Pigment Yellow 191 ist in EP-A-0 361 431 beschrieben.

Die meisten organischen Pigmente existieren in mehreren verschiedenen Kristallmodifikationen, auch "polymorphe Formen" genannt. Kristallmodifikationen haben dieselbe chemische Zusammensetzung, aber eine unterschiedliche Anordnung der Bausteine (Moleküle oder lonen) im Kristall. Die Kristallstruktur bestimmt die chemischen und physikalischen Eigenschaften, daher unterscheiden sich die einzelnen Kristallmodifikationen oftmals in der Rheologie, der Farbe und anderen coloristischen Eigenschaften. Die unterschiedlichen Kristallmodifikationen können durch Röntgenpulverdiffraktometrie identifiziert werden.

Von P.Y. 191 ist bisher nur eine Kristallmodifikation bekannt. Sie wird im Folgenden als α-Modifikation bezeichnet und zeichnet sich durch folgende charakteristische Linien im Röntgenpulverdiagramm aus (Cu-K_{α}-Strahlung, doppelte Beugungswinkel 20 in Grad, Netzebenenabstände d in Å⁻¹):

**α-Modifikation:**

| 2Θ | d | rel. Intensität |
|---|---|---|
| 4.96 | 17.78 | 51 |
| 8.98 | 9.84 | 32 |
| 10.04 | 8.80 | 16 |
| 11.33 | 7.80 | 24 |
| 11.53 | 7.66 | 20 |
| 15.00 | 5.90 | 17 |
| 16.03 | 5.52 | 20 |
| 17.21 | 5.14 | 26 |
| 18.17 | 4.87 | 39 |
| 18.56 | 4.77 | 31 |
| 19.26 | 4.60 | 18 |
| 20.12 | 4.40 | 34 |
| 21.04 | 4.21 | 47 |
| 21.29 | 4.17 | 30 |
| 22.82 | 3.89 | 19 |
| 23.10 | 3.84 | 39 |
| 24.31 | 3.65 | 15 |
| 26.29 | 3.38 | 100 |
| 26.58 | 3.35 | 62 |
| 27.25 | 3.26 | 21 |
| 28.69 | 3.10 | 11 |
| 29.12 | 3.06 | 10 |
| 29.89 | 2.98 | 20 |
| 31.47 | 2.84 | 9 |

Alle Linienlagen sind mit einer Ungenauigkeit von ± 0.2° behaftet.

Die α-Phase entsteht bei der Synthese von P.Y.191, wenn man die Kupplung der Disulfosäure mit dem sulfonierten Pyrazolon gemäß den Angaben in EP-A-0 361 431 durchführt.

Es wurde nun überraschenderweise gefunden, dass durch Behandlung von P.Y. 191 mit bestimmten Lösemitteln eine neue Kristallmodifikation entsteht. Die neue Kristallmodifikation wird als β-Modifikation bezeichnet.
Sie zeichnet sich durch folgende charakteristische Linien aus (Cu-K_{α}-Strahlung, 20-Werte in Grad, d-Werte in Å⁻¹):

| β-Modifikation: 2Θ | d | rel. Intensität |
|---|---|---|
| 4.90 | 18.03 | 100 |
| 8.44 | 10.47 | 9 |
| 9.49 | 9.31 | 10 |
| 10.04 | 8.80 | 19 |
| 12.53 | 7.05 | 8 |
| 14.73 | 6.01 | 12 |
| 15.21 | 5.81 | 20 |
| 15.79 | 5.60 | 12 |
| 16.93 | 5.23 | 9 |
| 17.74 | 4.99 | 17 |
| 18.50 | 4.79 | 13 |
| 19.79 | 4.48 | 13 |
| 20.11 | 4.41 | 17 |
| 21.77 | 4.07 | 7 |
| 23.01 | 3.86 | 8 |
| 25.44 | 3.49 | 32 |
| 25.85 | 3.44 | 19 |
| 26.89 | 3.31 | 10 |
| 29.11 | 3.06 | 7 |
| 29.71 | 3.00 | 5 |
| 30.40 | 2.93 | 7 |

Die Linienlagen sind mit einer Ungenauigkeit von ± 0,2° behaftet.

Die erfindungsgemäße Modifikation kann neben Ca²⁺-Ionen noch Na⁺-Ionen und Cl-lonen sowie Wassermoleküle im Kristallgitter enthalten, normalerweise bis zu 10 Gew.-%, bezogen auf das Gesamtgewicht.

Die neue Modifikation ist schwerlöslich und zeichnet sich durch gute Echtheiten und gelbe Färbungen aus.

Gegenstand der vorliegenden Erfindung ist ein Verfahren zur Phasenumwandlung von P.Y. 191, dadurch gekennzeichnet, dass man auf die Verbindung der Formel (1) 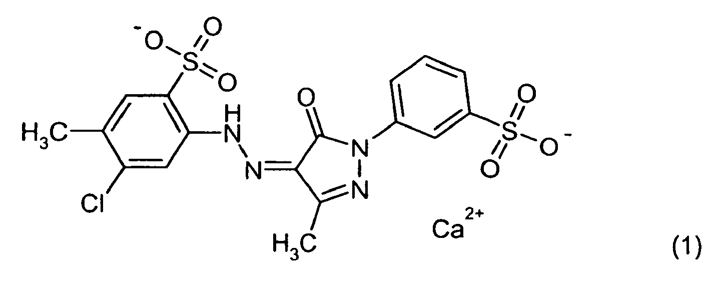 oder auf ein Tautomer, ein cis/trans-Isomer oder ein tautomeres cis/trans-Isomer der Verbindung der Formel (1)
ein Lösemittel aus der Gruppe N-Methylpyrrolidon, Dimethylsulfoxid, Ethylenglykol und Dimethylacetamid einwirken lässt, vorzugsweise bei einer Temperatur von 20 bis 250°C, insbesondere von 80 bis 200°C.

Zweckmäßigerweise wird das eingesetzte P.Y. 191, z.B. in der α-Phase, in dem Lösemittel gelöst und anschließend durch Temperaturerniedrigung, Zugabe von Wasser und/oder Verdampfen des Lösemittels ausgefällt, wobei die erfindungsgemäße Phase entsteht.

Die β-Modifikation erhält man beispielsweise, wenn man C.I. Pigment Yellow 191 aus N-Methylpyrrolidon, Dimethylacetamid oder Dimethylsulfoxid umkristallisiert. Dabei wird C.I. Pigment Yellow 191, z.B. in der α-Modifikation, in einem der genannten Lösemitteln gelöst, vorzugsweise bei einer Temperatur zwischen 150 und 210°C, und durch anschließende Temperaturerniedrigung und/oder durch Zugabe von Wasser ausgefällt.

Die Dauer der Lösemittelbehandlung kann zweckmäßig 10 Minuten bis 10 Stunden, bevorzugt 30 Minuten bis 5 Stunden, sein.

In Abhängigkeit von der Reinheit der Edukte, den Konzentrationen, den angewandten Temperaturen und Temperaturverläufen, einer eventuellen Nachbehandlung, dem Druck, der Anwesenheit von Verunreinigungen oder Additiven, und der Gegenwart von Impfkristallen kann die neue Kristallmodifikation in reiner Form oder eine Mischung von α- und/oder einer β- und/oder einer γ und/oder einer δ- und/oder einer ε-Phase entstehen, die sich durch folgende charakteristische Linien auszeichnen (Cu-Kα-Strahlung, 2Θ-Werte in Grad, d-Werte in A⁻¹):

| γ-Modifikation 2Θ | d | rel. Intensität |
|---|---|---|
| 4.77 | 18.49 | 100 |
| 10.08 | 8.76 | 27 |
| 11.79 | 7.50 | 29 |
| 13.39 | 6.60 | 20 |
| 14.34 | 6.17 | 21 |
| 16.71 | 5.30 | 22 |
| 18.23 | 4.86 | 30 |
| 21.22 | 4.18 | 29 |
| 22.67 | 3.91 | 21 |
| 23.10 | 3.84 | 20 |
| 25.79 | 3.45 | 36 |

| δ-Modifikation 2Θ | d | rel. Intensität |
|---|---|---|
| 4.69 | 18.82 | 46.6 |
| 8.14 | 10.85 | 28.1 |
| 8.67 | 10.19 | 23.8 |
| 10.09 | 8.76 | 24.7 |
| 11.37 | 7.78 | 25.1 |
| 13.50 | 6.55 | 18.8 |
| 15.83 | 5.60 | 19.9 |
| 16.27 | 5.44 | 22.9 |
| 17.03 | 5.20 | 29.2 |
| 17.70 | 5.01 | 20.7 |
| 19.13 | 4.63 | 20.4 |
| 19.39 | 4.57 | 26.1 |
| 20.27 | 4.38 | 22.0 |
| 21.41 | 4.15 | 39.6 |
| 22.96 | 3.87 | 32.4 |
| 24.16 | 3.68 | 100.0 |
| 24.79 | 3.59 | 26.1 |
| 26.30 | 3.39 | 21.2 |
| 27.14 | 3.28 | 11.3 |
| 27.67 | 3.22 | 12.8 |
| 30.99 | 2.88 | 10.5 |
| 31.59 | 2.83 | 10.6 |
| 33.13 | 2.70 | 10.6 |

**ε-Modifikation:**

| 2Θ | d | rel. Intensität |
|---|---|---|
| 5.34 | 16.54 | 66 |
| 7.81 | 11.31 | 100 |
| 12.20 | 7.25 | 35 |
| 18.49 | 4.79 | 45 |
| 23.22 | 3.83 | 63 |
| 25.04 | 3.55 | 57 |
| 29.58 | 3.01 | 29 |

Eine reine oder überwiegend reine Kristallmodifikation entsteht bevorzugt, wenn man von einer Lösung oder Suspension ausgeht, in der bereits Impfkristalle oder Kristallkeime dieser Modifikation vorhanden sind, und wenn man die Fällung so langsam durchführt, dass die Übersättigung in einem Bereich gehalten wird, in dem die Kristallwachstumsgeschwindigkeit relativ hoch, die Kristallkeimbildungsgeschwindigkeit jedoch relativ gering ist, so dass die vorhandenen Kristallkeime unter Beibehaltung der Modifikation wachsen. Der Einsatz eines mechanischen Rührers kann von Vorteil sein, da er vorhandene Kristalle der gewünschten Modifikation in viele kleinere Bruchstücke zerschlägt, die dann wieder als Kristallkeime für diese Modifikation dienen (so genannte Sekundärnukleation). Wenn die Übersättigung höher ist, z.B. weil die Lösung schneller abgekühlt wird, ist die Kristallkeimbildungsgeschwindigkeit viel höher, so dass spontan viele Kristallkeime dieser Modifikation und anderer Modifikationen entstehen können; dabei erhält man vorzugsweise Modifikationsmischungen, die nur zum Teil aus der gewünschten Modifikation bestehen.

Die Herstellung einer Mischung der erfindungsgemäßen Modifikation, oder aus der erfindungsgemäßen Modifikation mit der α-Modifikation kann von Interesse sein, wenn bestimmte coloristische und rheologische Eigenschaften gewünscht werden, insbesondere wenn Eigenschaften gewünscht werden, die zwischen den Eigenschaften der Reinmodifikationen liegen. Es ist z.B. auch möglich, eine Mischung aus β- oder γ-Modifikation und anderen Modifikationen aufzukonzentrieren, um einen höheren β-Anteil oder auch die reine β-Modifikation zu erhalten, beispielsweise durch Sichten, Rekristallisation, Tempern, selektives Herauslösen oder Extrahieren der anderen Modifikationen, oder durch wiederholtes Anwenden von erfindungsgemäßen Verfahrensmaßnahmen, in denen das Entstehen der β-Modifikation begünstigt ist. Gleiches gilt für die δ- und ε-Modifikation.

Gegenstand der vorliegenden Erfindung ist daher auch eine C.I. Pigment Yellow 191-Mischung, die mindestens 10 %, vorzugsweise mindestens 25 %, insbesondere mindestens 50 %, besonders bevorzugt mindestens 75 %, ganz besonders bevorzugt mindestens 90 % der β-Modifikation enthält.

Je nach gewünschtem Anwendungsbereich kann es sinnvoll sein, das erhaltene Pigment einer mechanischen Feinverteilung zu unterwerfen. Die Feinverteilung kann durch Nass- oder Trockenmahlung oder Kneten erfolgen. An die Mahlung bzw. Knetung kann sich eine Behandlung mit einem Lösemittel, mit Wasser, oder einem Lösemittel/Wasser-Gemisch anschließen, um das Pigment in eine gebrauchsfähige Form zu überführen.

Zur Erleichterung des Modifikationswechsels, zur Stabilisierung der erfindungsgemäßen Modifikationen, zur Verbesserung der coloristischen Eigenschaften und zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Nachbehandlungen, oder nach den Nachbehandlungen zugegeben werden. Der am besten geeignete Zeitpunkt muss zuvor durch orientierende Versuche ermittelt werden.

Das erfindungsgemäße C.I. Pigment Yellow 191 in der beta-Modifikation, oder die Mischungen, die die beta-Modifikation enthalten, eignen sich zum Pigmentieren von Druckfarben, Lacken, wässrigen oder lösemittelhaltigen Präparationen und von Kunststoffen wie thermoplastischen und duroplastischen Massen, natürlichen Harzen und Kunstharzen, Polystyrol und dessen Mischpolymerisaten, Polyolefinen, insbesondere Polyethylen und Polypropylen, Polyacryl-Verbindungen, Polyvinyl-Verbindungen, beispielsweise Polyvinylchlorid und Polyvinylacetat, Polyestern und Gummi, sowie Kunstseiden aus Viskose und Celluloseethern, Celluloseestern, Polyamiden, Polyurethanen, Polyestern, beispielsweise Polyglykolterephthalaten und Polyacrylnitril.
Die erfindungsgemäße Phase von P.Y.191 ist geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren ist die erfindungsgemäße Phase von P.Y. 191 geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte lsocyanate, Bisacylurethane, Phenol- und Melaminharze, Triglycidylisocyanurate, Oxazoline und Dicarbonsäuren.

Außerdem ist die erfindungsgemäße Phase von P.Y. 191 als Farbmittel in Tinten, vorzugsweise Ink-Jet Tinten, wie z.B. auf wässriger oder nichtwässriger Basis, Mikroemulsionstinten sowie in solchen Tinten, die nach dem hot-melt-Verfahren arbeiten, geeignet.
Ink-Jet-Tinten enthalten im Allgemeinen insgesamt 0,5 bis 15 Gew.-%, vorzugsweise 1,5 bis 8 Gew.-%, (trocken gerechnet) der erfindungsgemäßen Verbindung. Mikroemulsionstinten basieren auf organischen Lösemitteln, Wasser und ggf. einer zusätzlichen hydrotropen Substanz (Grenzflächenvermittler). Mikroemulsionstinten enthalten 0,5 bis 15 Gew.-%, vorzugsweise 1,5 bis 8 Gew.-%, einer erfindungsgemäßen Verbindung, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% einer erfindungsgemäßen Verbindung, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im Wesentlichen aus 20 bis 90 Gew.-% Wachs und 1 bis 10 Gew.-% der erfindungsgemäßen Verbindung. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein. Typische Zusatzstoffe und Hilfsmittel sind z.B. in US-PS 5,560,760 beschrieben.

Außerdem ist die erfindungsgemäße Phase von P.Y. 191 auch geeignet als Farbmittel für Farbfilter, sowohl für die additive wie für die subtraktive Farberzeugung, sowie zur Einfärbung von Saatgut.
In den folgenden Beispielen sind Teile und Prozentangaben auf das Gewicht bezogen. Die Bestimmung der Kristallmodifikation der erhaltenen Produkte erfolgt durch Röntgenpulverdiffraktometrie.

### Vergleichsbeispiel (gemäß EP-A-0 361 431):

221 Teile 2-Amino-4-chlor-5-methylbenzol-1-sulfonsäure werden in 2000 Teilen Trinkwasser und 123 Teilen 33gew.-%iger Natronlauge unter Erwärmen gelöst, geklärt und mit 300 Volumenteilen konzentrierter Salzsäure versetzt. Durch Zugabe von Eis kühlt man auf ca. 15°C und diazotiert mit 140 Volumenteilen einer 38 gew.-%igen Natriumnitritlösung. In 2000 Teilen Trinkwasser und 150 Teilen 33 gew.-%iger Natronlauge löst man 254 Teile 1-(3'-Sulfophenyl)-3-methyl-5-pyrazolon und gibt 2,5 Teile Talgfettpropylendiamin, gelöst in 80 Teilen Wasser, hinzu. In die 60°C warme Lösung der Kupplungskomponente lässt man die Suspension des Diazoniumsalzes langsam einlaufen, wobei der pH-Wert unter Zugabe von Natronlauge im Bereich von 6,0 bis 6,5 gehalten wird. Nach beendeter Kupplung erhitzt man auf 80°C und lässt rasch eine 80°C warme, wässrige Lösung von 250 Teilen Calciumchlorid einlaufen. Die Pigmentsuspension wird 2 Stunden bei 80°C nachgerührt, filtriert und gewaschen. Der Presskuchen wird bei 120°C getrocknet.
Man erhält C.I. Pigment Yellow 191 in der alpha-Modifikation.

### Beispiel 1: Herstellung der β-Phase durch Umkristallisation in NMP

25 Teile P.Y.191 in der α-Phase werden in 1000 Teilen N-Methylpyrrolidon bei 180°C gelöst. Nach dem Abkühlen auf Raumtemperatur setzt man so viel Wasser hinzu, bis das Pigment fast quantitativ wieder ausgefallen ist. Man erhält P.Y.191 in der β-Phase.

### Beispiel 2: Herstellung der β-Phase durch Umkristallisation in DMSO

Man erhitzt 1000 Teile Dimethylsulfoxid zum Sieden und gibt so viel P.Y. 191 in der alpha-Phase hinzu, dass eine gesättigte Lösung entsteht. Nach dem Abkühlen auf Raumtemperatur setzt man so viel Wasser hinzu, bis das Pigment fast quantitativ wieder ausgefallen ist. Man erhält P.Y.191 in der β-Phase.

### Beispiel 3: Herstellung der β-Phase durch Umkristallisation in Dimethylacetamid

Man verfährt wie in Beispiel 2, verwendet aber Dimethylacetamid anstelle von DMSO. Man erhält P.Y. 191 in der β-Phase.

## Patentansprüche

1. Verfahren zur Phasenumwandlung von C.I. Pigment Yellow 191, **dadurch gekennzeichnet, dass** man auf die Verbindung der Formel (1) 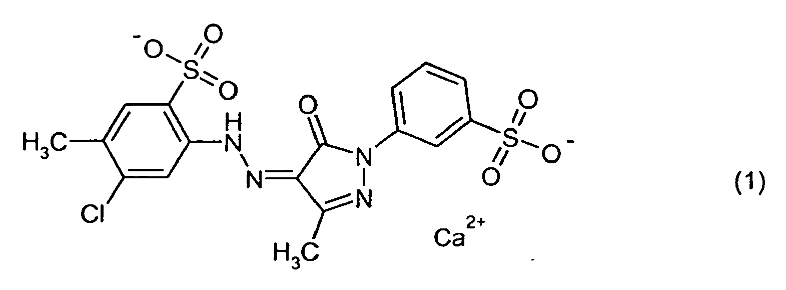 oder auf ein Tautomer, ein cis/trans-Isomer oder ein tautomeres cis/trans-Isomer der Verbindung der Formel (1)
ein Lösemittel aus der Gruppe N-Methylpyrrolidon, Dimethylsulfoxid und Dimethylacetamid einwirken lässt.

2. Verfahren nach Anspruch 1, **dadurch gekennzeichnet, dass** man das Lösemittel bei einer Temperatur von 20 bis 250°C, insbesondere von 80 bis 200°C, einwirken lässt.

3. Verfahren nach Anspruch 1 oder 2, **dadurch gekennzeichnet, dass** man das Lösemittel 10 Minuten bis 10 Stunden einwirken lässt.

4. Verfahren nach mindestens einem der Ansprüche 1 bis 3, **dadurch gekennzeichnet, dass** die Verbindung der Formel (1) in dem Lösemittel gelöst und anschließend durch Temperaturerniedrigung, Zugabe von Wasser und/oder Verdampfen des Lösemittels ausgefällt wird.

5. Verfahren nach mindestens einem der Ansprüche 1 bis 4, **dadurch gekennzeichnet, dass** die eingesetzte Verbindung der Formel (1) in der alpha-Modifikation vorliegt.

6. C.I. Pigment Yellow 191 der Formel (1) oder eine tautomere, eine cis/trans-isomere oder eine tautomere cis/trans-isomere Form davon, die gegebenenfalls noch Natriumionen, Chloridionen und/oder Wassermoleküle im Kristallgitter enthält 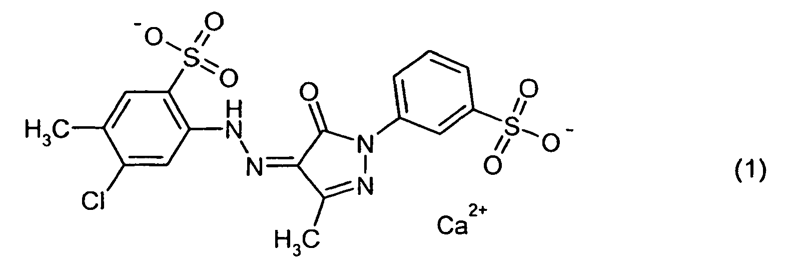 **gekennzeichnet durch** folgende charakteristische Reflexe im Röntgenpulverdiffraktogramm, gemessen mit Cu-K_{α}-Strahlung:
| β-Modifikation: 2Θ | d | rel. Intensität |
|---|---|---|
| 4.90 | 18.03 | 100 |
| 8.44 | 10.47 | 9 |
| 9.49 | 9.31 | 10 |
| 10.04 | 8.80 | 19 |
| 12.53 | 7.05 | 8 |
| 14.73 | 6.01 | 12 |
| 15.21 | 5.81 | 20 |
| 15.79 | 5.60 | 12 |
| 16.93 | 5.23 | 9 |
| 17.74 | 4.99 | 17 |
| 18.50 | 4.79 | 13 |
| 19.79 | 4.48 | 13 |
| 20.11 | 4.41 | 17 |
| 21.77 | 4.07 | 7 |
| 23.01 | 3.86 | 8 |
| 25.44 | 3.49 | 32 |
| 25.85 | 3.44 | 19 |
| 26.89 | 3.31 | 10 |
| 29.11 | 3.06 | 7 |
| 29.71 | 3.00 | 5 |
| 30.40 | 2.93 | 7 |

7. C.I. Pigment Yellow 191-Mischung, die mindestens 10 %, vorzugsweise mindestens 25 %, insbesondere mindestens 50 %, besonders bevorzugt mindestens 75 %, ganz besonders bevorzugt mindestens 90 % der in Anspruch 6 definierten β-Modifikation enthält.

8. Verwendung von C.I. Pigment Yellow 191 nach Anspruch 6 oder 7 zum Pigmentieren von Lacken, Kunststoffen, Druckfarben, wässrigen oder lösemittelhaltigen Pigmentpräparationen, elektrophotographischen Tonern und Entwicklern, Pulverlacken, Tinten, vorzugsweise Ink-Jet-Tinten, Farbfiltern, und zum Einfärben von Saatgut.

## Claims

1. A process for phase conversion of C.I. Pigment Yellow 191, which comprises causing a solvent selected from the group consisting of N-methylpyrrolidone, dimethyl sulfoxide and dimethylacetamide to act on the compound of the formula (1) 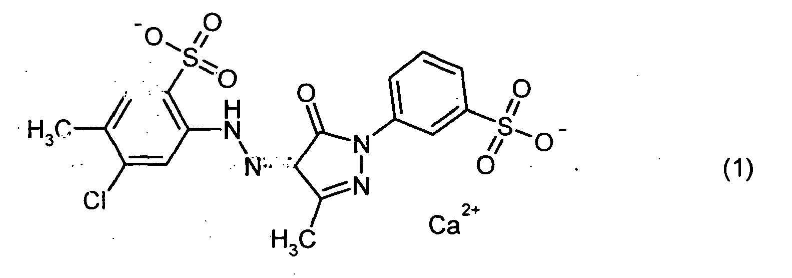 or on a tautomer, cis/trans isomer or tautomeric cis/transisomer of the compound of the formula (1),

2. The process as claimed in claim 1, wherein the solvent is caused to act at a temperature of from 20 to 250°C, in particular from 80 to 200°C.

3. The process as claimed in claim 1 or 2, wherein the solvent is caused to act from 10 minutes to 10 hours.

4. The process as claimed in at least one of claims 1 to 3, wherein the compound of the formula (1) is dissolved in the solvent and then precipitated by reducing the temperature, adding water and/or evaporating the solvent.

5. The process as claimed in at least one of claims 1 to 4, wherein the compound of the formula (1) used is the alpha polymorph.

6. C.I. Pigment Yellow 191 of the formula (1) or a tautomeric, cis/trans-isomeric or tautomeric cis/trans-isomeric form thereof which may further comprise sodium ions, chloride ions and/or water molecules in the crystal lattice 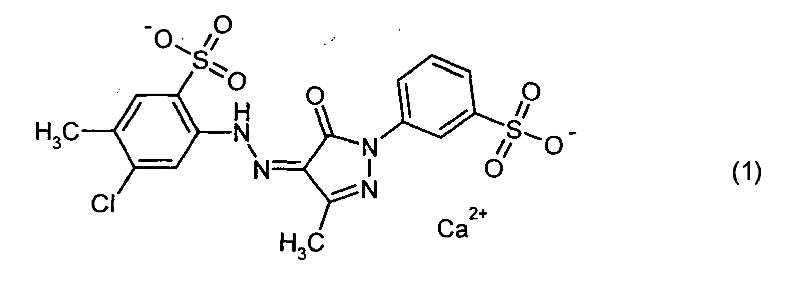 **characterized by** the following reflections in the X-ray powder diffractogram, measured with Cu-K_{α} radiation:
**β-polymorph:**
| 2Θ | d | rel. intensity |
|---|---|---|
| 4.90 | 18.03 | 100 |
| 8.44 | 10.47 | 9 |
| 9.49 | 9.31 | 10 |
| 10.04 | 8.80 | 19 |
| 12.53 | 7.05 | 8 |
| 14.73 | 6.01 | 12 |
| 15.21 | 5.81 | 20 |
| 15.79 | 5.60 | 12 |
| 16.93 | 5.23 | 9 |
| 17.74 | 4.99 | 17 |
| 18.50 | 4.79 | 13 |
| 19.79 | 4.48 | 13 |
| 20.11 | 4.41 | 17 |
| 21.77 | 4.07 | 7 |
| 23.01 | 3.86 | 8 |
| 25.44 | 3.49 | 32 |
| 25.85 | 3.44 | 19 |
| 26.89 | 3.31 | 10 |
| 29.11 | 3.06 | 7 |
| 29.71 | 3.00 | 5 |
| 30.40 | 2.93 | 7 |

7. A C.I. Pigment Yellow 191 mixture comprising at least 10%, preferably at least 25%, in particular at least 50%, with particular preference at least 75%, with very particular preference at least 90%, of the β polymorph defined in claim 6.

8. The use of C.I. Pigment Yellow 191 as claimed in claim 6 or 7 for pigmenting varnishes, polymers, printing inks, aqueous or solventborne pigment preparations, electrophotographic toners and developers, powder coating materials, inks, preferably ink-jet inks, color filters, and for coloring seed.

## Revendications

1. Procédé pour le changement de phase du Pigment C.I. Yellow 191, **caractérisé en ce qu'**on fait agir sur le composé de formule (1) 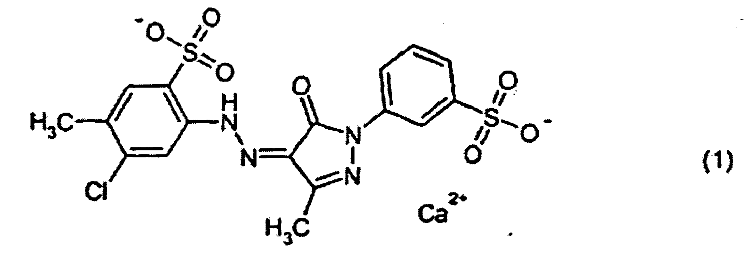 ou sur un tautomère, un isomère cis/trans ou un isomère cis/trans tautomère du composé de formule (1) un solvant du groupe N-méthylpyrrolidone, diméthylsulfoxyde et diméthylacétamide.

2. Procédé selon la revendication 1, **caractérisé en ce qu'**on fait agir le solvant à une température de 20 à 250 °C, en particulier de 80 à 200 °C.

3. Procédé selon la revendication 1 ou 2, **caractérisé en ce qu'**on fait agir le solvant de 10 minutes à 10 heures.

4. Procédé selon au moins une des revendications 1 à 3, **caractérisé en ce qu'**on dissout le composé de formule (1) dans le solvant et ensuite on le fait précipiter par abaissement de la température, ajout d'eau et/ou évaporation du solvant.

5. Procédé selon au moins une des revendications 1 à 4, **caractérisé en ce que** le composé de formule (1) utilisé se trouve dans la modification alpha.

6. Pigment C.I. Yellow 191 de formule (1) ou une forme tautomère, isomère cis/trans ou isomère cis/trans tautomère de celui-ci, qui contient éventuellement encore des ions sodium, des ions chlore et/ou des molécules d'eau dans le réseau cristallin 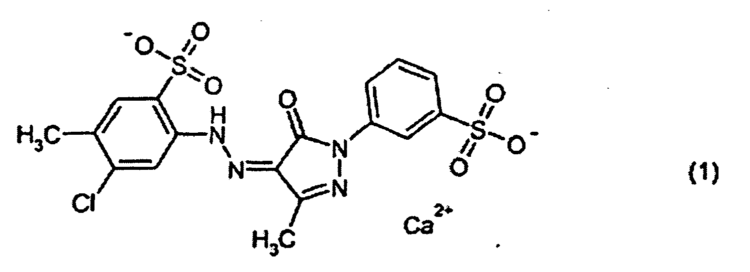 **caractérisé par** les angles de réflexion caractéristiques suivants du diffractogramme de poudre aux rayons X, mesurés avec la raie Cu-K_{α} :
**Modification β**
| 2Θ | d | Intensité rel. |
|---|---|---|
| 4,90 | 18,03 | 100 |
| 8,44 | 10,47 | 9 |
| 9,49 | 9,31 | 10 |
| 10,04 | 8,80 | 19 |
| 12,53 | 7,05 | 8 |
| 14,73 | 6,01 | 12 |
| 15,21 | 5,81 | 20 |
| 15,79 | 5,60 | 12 |
| 16,93 | 5,23 | 9 |
| 17,74 | 4,99 | 17 |
| 18,50 | 4,79 | 13 |
| 19,79 | 4,48 | 13 |
| 20,11 | 4,41 | 17 |
| 21,77 | 4,07 | 7 |
| 23,01 | 3,86 | 8 |
| 25,44 | 3,49 | 32 |
| 25,85 | 3,44 | 19 |
| 26,89 | 3,31 | 10 |
| 29,11 | 3,06 | 7 |
| 29,71 | 3,00 | 5 |
| 30,40 | 2,93 | 7 |

7. Mélange de Pigments C.I. Yellow 191, qui contient au moins 10 %, de préférence au moins 25 %, en particulier au moins 50 %, de manière particulièrement préférée au moins 75 %, de manière tout à fait particulièrement préférée au moins 90 % de la modification β définie à la revendication 6.

8. Utilisation du Pigment C.I. Yellow 191 selon la revendication 6 ou 7 pour la pigmentation de peintures, de matières plastiques, de colorants d'impression, de préparations pigmentaires aqueuses ou à base de solvants, de toners et de révélateurs électrophotographiques, de peintures en poudre, d'encres, de préférence d'encre pour l'impression à jet d'encre, de filtres de couleur et pour la teinture de semences.
